# EUROPEAN PATENT SPECIFICATION

(11) **EP 4 026 868 B1**
(45) Date of publication and mention of the grant of the patent: **01.04.2026**
(21) Application number: 20860605.3
(22) Date of filing: 28.08.2020
(51) Int. Cl.: C08J 3/20, C09C 3/06, C08L 67/00, C08K 3/013, C08L 67/03, C08L 67/04, C08K 3/34, C08K 3/22, C08G 63/60, C08K 9/02

(54) **METHOD FOR PRODUCING LIQUID CRYSTAL POLYESTER RESIN COMPOSITION, AND LIQUID CRYSTAL POLYESTER RESIN COMPOSITION**
VERFAHREN ZUR HERSTELLUNG EINER FLÜSSIGKRISTALLINEN POLYESTERHARZZUSAMMENSETZUNG UND FLÜSSIGKRISTALLINE POLYESTERHARZZUSAMMENSETZUNG
PROCÉDÉ DE PRODUCTION D'UNE COMPOSITION DE RÉSINE DE POLYESTER À CRISTAUX LIQUIDES, ET COMPOSITION DE RÉSINE DE POLYESTER À CRISTAUX LIQUIDES

(30) Priority: 04.09.2019 JP 2019161353
(43) Date of publication of application: 13.07.2022
(73) Proprietor: SUMITOMO CHEMICAL COMPANY, LIMITED, Tokyo 103-6020 (JP)
(72) Inventor: HEGI, Hiromitsu, Katsuragi-shi, Nara 639-2123 (JP); SAITO, Shintaro, Tsukuba-shi, Ibaraki 300-3294 (JP)
(74) Representative: Vossius & Partner Patentanwälte Rechtsanwälte mbB
(86) International application number: PCT/JP2020/032608
(87) International publication number: WO 2021/044966

(56) References cited:
- WO-A1-2011/115043
- JP-A- 2002 129 064
- JP-A- 2005 305 744
- JP-A- 2009 179 693
- JP-A- 2010 243 571
- JP-A- 2015 534 600
- JP-A- H0 468 055
- JP-A- H01 282 245
- JP-A- H03 502 818
- JP-A- H06 240 120
- JP-A- H07 157 686
- JP-A- S5 089 443

## Description

### [Technical Field]

The present invention relates to a method for producing a liquid crystal polyester resin composition, and a liquid crystal polyester resin composition obtained by the production method.

### [Background Art]

In recent years, liquid crystal polyester resin compositions have been used as materials for exterior parts.

Liquid crystal polyester resins are used for tableware used at high temperature because the liquid crystal polyester resins have particularly excellent heat resistance. A molded article for tableware is required to have an excellent design, and for example, there is a demand for a metallic appearance.

In response to this demand, metallic materials and the like using metallic fillers to be contained in the liquid crystal polyester resin composition have been developed.

For example, Patent Literature 1 discloses a molded article prepared by using a liquid crystal polymer composition containing a metallic pigment (metal particles such as aluminum, zinc, iron, magnesium, copper, and nickel) JP 2015 534600 A discloses a blend of liquid crystalline polymer, mica and metallic pigments (encapsulated or on carrier ).

### [Citation List]

### [Patent Literature]

[Patent Literature 1]
Specification of United States Patent Application, Publication No. 2014/0099459

### [Summary of Invention]

### [Technical Problem]

When the liquid crystal polyester resin composition contains a metallic filler such as the metallic pigment described in Patent Literature 1, the insulation resistance of the liquid crystal polyester resin composition is lowered. Therefore, when the liquid crystal polyester resin composition is used as a material for an electronic component, a peripheral member for electromagnetic induction heating, or a microwave heating container or a peripheral member thereof, there is a problem that the use of the liquid crystal polyester resin composition is restricted.

To solve this problem, a method of using a non-metal-based metallic filler instead of a metallic filler can be considered.

Incidentally, a molded article for tableware is required to be strong enough not to break even when a consumer accidentally drops the molded article during use. However, depending on the type of non-metal-based metallic filler, the impact strength of the molded article may decrease when it is incorporated into a liquid crystal polyester resin composition of the related art.

The present invention has been made in view of the above circumstances, and provides a method for producing a liquid crystal polyester resin composition from which a molded article having an excellent design and excellent impact strength is able to be produced, and a liquid crystal polyester resin composition obtained by the production method.

### [Solution to Problem]

During the study by the present inventors, it was found that, depending on the non-metal-based metallic filler incorporated into the liquid crystal polyester resin composition, the liquid crystal polyester resin having an ester bond was hydrolyzed, and the impact strength of the molded article to be molded by the composition containing the polyester resin was reduced.

For example, as a non-metal-based metallic filler, plate-shaped inorganic filler particles coated with titanium oxide are commercially available. Since titanium oxide has high photocatalytic activity, the surface of titanium oxide is generally surface-treated with an inorganic substance. Therefore, the plate-shaped inorganic filler particles coated with titanium oxide are used in a state where the high photocatalytic activity of titanium oxide is firmly suppressed by the surface treatment. However, the liquid crystal polyester resin may be deteriorated by hydrolysis due to the residual acid used in the surface treatment.

In order to solve the above problems, the present invention has adopted the configuration which is defined in the claims.

### [Advantageous Effects of Invention]

According to the present invention, it is possible to provide a method for producing a liquid crystal polyester resin composition from which a molded article having an excellent design and excellent impact strength is able to be produced, and a liquid crystal polyester resin composition obtained by the production method.

### [Description of Embodiments]

### (Method for producing liquid crystal polyester resin composition)

Method for producing liquid crystal polyester resin composition of the present embodiment includes a step (i) of mixing a component (P): liquid crystal polyester resin with a component (M): non-metallic and powdery pigment having a metallic color.

As the step (i) in the present embodiment, a method of mixing by rotating a stir bar, a stirring blade, and the like; a method of mixing by using a kneading device such as a twin-screw extruder, a universal mixer, a kneader, or a Banbury mixer, and the like, may be adopted.

In the step (i), the incorporating order of each component is not particularly limited.

When incorporating each component, all the components may be added and then mixed, some components may be mixed in when being added sequentially, or all the components may be sequentially added and mixed.

In the step (i), the temperature at the time of mixing is not particularly limited as long as each incorporated component is not deteriorated, and can be appropriately adjusted, for example, according to the type and amount of the incorporated component such that the mixture obtained by incorporating has a viscosity that makes it easy to stir. The temperature at the time of mixing is, for example, 250 to 400°C.

The mixing time is also not particularly limited as long as each incorporated component is not deteriorated, and is, for example, 1 minute to 24 hours.

### <Component (P): liquid crystal polyester resin>

Component (P) in the present embodiment: a liquid crystal polyester resin having a repeating unit derived from a hydroxycarboxylic acid as a mesogenic group. Here, the "hydroxycarboxylic acid" means a compound having both a hydroxy group (-OH) and a carboxy group (-C(=O)-OH) in one molecule.

The component (P) is a polyester resin that exhibits liquid crystallinity in a molten state, and preferably melts at a temperature of 450°C or lower. The liquid crystal polyester resin is preferably a wholly aromatic liquid crystal polyester resin using only an aromatic compound as a raw material monomer.

Typical examples of the component (P) include a product obtained by polymerizing (polycondensing) aromatic hydroxy carboxylic acids, aromatic dicarboxylic acids, and at least one compound selected from a group consisting of aromatic diols, aromatic hydroxyamines, and aromatic diamines; a product obtained by polymerizing a plurality of types of aromatic hydroxy carboxylic acids; and a product obtained by polymerizing a polyester such as polyethylene terephthalate and an aromatic hydroxy carboxylic acid. Here, independently of and in place of some or all of the aromatic hydroxy carboxylic acids, the aromatic dicarboxylic acids, the aromatic diols, the aromatic hydroxyamines, and the aromatic diamines, polymerizable derivatives thereof may be used.

Examples of polymerizable derivatives of compounds having a carboxy group, such as aromatic hydroxy carboxylic acids and aromatic dicarboxylic acids include a product (ester) obtained by converting a carboxy group into an alkoxycarbonyl group or an aryloxycarbonyl group; a product (acid halide) obtained by converting a carboxy group into a haloformyl group; and a product (acid anhydride) obtained by converting a carboxy group into an acyloxycarbonyl group.

Examples of polymerizable derivatives of compounds having a hydroxy group, such as aromatic hydroxy carboxylic acids, aromatic diols, and aromatic hydroxyamines include a product (acylated product) obtained by acylating a hydroxy group and converting the acylated hydroxy group into an acyloxy group.

Examples of polymerizable derivatives of compounds having an amino group, such as aromatic hydroxyamines and aromatic diamines include a product (acylated product) obtained by acylating an amino group and converting the acylated amino group into an acylamino group.

The component (P) preferably has a repeating unit (hereinafter may be referred to as "repeating unit (1)") represented by the following Formula (1). The repeating unit (1) corresponds to the above-mentioned mesogenic group.

(1) -O-Ar¹-CO-

[In Formula (1), Ar¹ represents a phenylene group, a naphthylene group, or a biphenylene group, and one or more hydrogen atoms in the group represented by Ar¹ may be substituted with a halogen atom, an alkyl group having 1 to 10 carbon atoms, or an aryl group having 6 to 20 carbon atoms.]

Examples of halogen atoms which may substitute one or more hydrogen atoms in the group represented by Ar¹ include a fluorine atom, a chlorine atom, a bromine atom, and an iodine atom.

Examples of an alkyl group having 1 to 10 carbon atoms which may substitute one or more hydrogen atoms in the group represented by Ar¹ include a methyl group, an ethyl group, an n-propyl group, an isopropyl group, an n-butyl group, an isobutyl group, a sec-butyl group, a tert-butyl group, an n-hexyl group, an n-heptyl group, a 2-ethylhexyl group, an n-octyl group, an n-nonyl group, and an n-decyl group.

Examples of an aryl group having 6 to 20 carbon atoms which may substitute one or more hydrogen atoms in the group represented by Ar¹ include monocyclic aromatic groups such as a phenyl group, an o-tolyl group, an m-tolyl group, and a p-tolyl group; and condensed-ring aromatic groups such as a 1-naphthyl group and a 2-naphthyl group.

When one or more hydrogen atoms in the group represented by Ar¹ are substituted with these groups, the number of times of substitution is preferably 1 or 2, and more preferably 1.

The repeating unit (1) is a repeating unit derived from a predetermined aromatic hydroxy carboxylic acid.

As the repeating unit (1), a repeating unit (a repeating unit derived from 4-hydroxybenzoic acid) in which Ar¹ is a 1,4-phenylene group, and a repeating unit (a repeating unit derived from 6-hydroxy-2-naphthoic acid) in which Ar¹ is a 2,6-naphthylene group, are preferable.

In other words, as an example of the preferable component (P), those having a repeating unit derived from either or both of p-hydroxybenzoic acid and 6-hydroxy-2-naphthoic acid are preferable.

The component (P) preferably has a repeating unit (hereinafter may be referred to as "repeating unit (2)") represented by the following Formula (2).

In addition, the component (P) preferably has a repeating unit (hereinafter may be referred to as "repeating unit (3)") represented by the following Formula (3). Among these, those having a repeating unit (1) (preferably, one in which Ar¹ is a 1,4-phenylene group or a 2,6-naphthylene group), a repeating unit (2), and a repeating unit (3) are more preferable.

(2) -CO-Ar²-CO-

[In Formula (2), Ar² represents a phenylene group, a naphthylene group, a biphenylene group, or a group represented by the following Formula (4). One or more hydrogen atoms contained in Ar² may be substituted with a halogen atom, an alkyl group having 1 to 10 carbon atoms, or an aryl group having 6 to 20 carbon atoms.]

(4) -Ar⁴-Z-Ar⁵-

[In Formula (4), Ar⁴ and Ar⁵ represent a phenylene group or a naphthylene group independently of each other.

Z represents an oxygen atom, a sulfur atom, a carbonyl group, a sulfonyl group, or an alkylidene group having 1 to 10 carbon atoms.]

(3) -X-Ar³-Y-

[In Formula (3), Ar³ represents a phenylene group, a naphthylene group, a biphenylene group, or a group represented by Formula (4).

X and Y represent an oxygen atom or an imino group (-NH-) independently of each other.

One or more hydrogen atoms contained in Ar³ may be substituted with a halogen atom, an alkyl group having 1 to 10 carbon atoms, or an aryl group having 6 to 20 carbon atoms.]

(4) -Ar⁴-Z-Ar⁵-

[In Formula (4), Ar⁴ and Ar⁵ represent a phenylene group or a naphthylene group independently of each other.

Z represents an oxygen atom, a sulfur atom, a carbonyl group, a sulfonyl group, or an alkylidene group having 1 to 10 carbon atoms.]

A halogen atom, an alkyl group, and an aryl group which may substitute one or more hydrogen atoms in the group represented by Ar² or Ar³ are the same as the halogen atoms which may substitute one or more hydrogen atoms in the group represented by Ar¹, an alkyl group having 1 to 10 carbon atoms, and an aryl group having 6 to 20 carbon atoms.

When one or more hydrogen atoms in the group represented by Ar² or Ar³ are substituted with these groups, the number of times of substitution is preferably one or two, and more preferably 1 independently of each other for each group represented by Ar² or Ar³.

Preferable examples of the alkylidene group having 1 to 10 carbon atoms include a methylene group, an ethylidene group, an isopropylidene group, an n-butylidene group, and a 2-ethylhexylidene group, and one having 1 to 10 carbon atoms is preferable.

The repeating unit (2) is a repeating unit derived from a predetermined aromatic dicarboxylic acid.

As the repeating unit (2), a repeating unit (a repeating unit derived from terephthalic acid) in which Ar² is a 1,4-phenylene group; a repeating unit (a repeating unit derived from isophthalic acid) in which Ar² is a 1,3-phenylene group; a repeating unit (a repeating unit derived from 2,6-naphthalenedicarboxylic acid) in which Ar² is a 2,6-naphthylene group; a repeating unit (a repeating unit derived from 4,4'-dicarboxybiphenyl) in which Ar² is a 4,4'-biphenylene group; or a repeating unit (a repeating unit derived from 4,4'-dicarboxydiphenyl ether) in which Ar² is a diphenyl ether-4,4'-diyl group is preferable, and a repeating unit in which Ar² is a 1,4-phenylene group, a 1,3-phenylene group, a 2,6-naphthylene group, or a 4,4'-biphenylylene group is more preferable.

The repeating unit (3) is a repeating unit derived from a predetermined aromatic diol, aromatic hydroxylamine, or aromatic diamine.

As the repeating unit (3), a repeating unit (a repeating unit derived from hydroquinone, p-aminophenol, or p-phenylenediamine) in which Ar³ is a 1,4-phenylene group; a repeating unit (a repeating unit derived from 1,3-benzenediol, m-aminophenol (for example, 4-acetoxyaminophenol), or m-phenylenediamine) in which Ar³ is a 1,3-phenylene group; a repeating unit (a repeating unit derived from 2,6-dihydroxynaphthalene, a repeating unit derived from 2-hydroxy-6-aminonaphthalene, or a repeating unit derived from 2,6-diaminonaphthalene) in which Ar³ is a 2,6-naphthylene group; a repeating unit (a repeating unit derived from 4,4'-dihydroxybiphenyl, 4-amino-4'-hydroxybiphenyl, or 4,4'-diaminobiphenyl) in which Ar³ is a 4,4'-biphenylene group; or a repeating unit (a repeating unit derived from 4,4'-dihydroxydiphenyl ether, a repeating unit derived from 4-hydroxy-4'-aminodiphenyl ether, or a repeating unit derived from 4,4'-diaminodiphenyl ether) in which Ar³ is a phenyl ether-4,4'-diyl group, is preferable, and a repeating unit in which Ar³ is a 1,4-phenylene group, a 1,3-phenylene group, a 2,6-naphthylene group, or a 4,4'-biphenylylene group is more preferable.

The component (P) preferably has a repeating unit (3) in which X and Y are oxygen atoms, respectively, that is, a repeating unit derived from a predetermined aromatic diol, and more preferably has only a repeating unit (3) in which X and Y are oxygen atoms, respectively.

In other words, the component (P) more preferably has a repeating unit (hereinafter may be referred to as "repeating unit (21)") represented by the following Formula (21), and a repeating unit (hereinafter may be referred to as "repeating unit (31)") represented by the following Formula (31), and still more preferably has the repeating unit (1) (preferably, a repeating unit in which Ar¹ is a 1,4-phenylene group or a 2,6-naphthylene group), the repeating unit (21), and the repeating unit (31).

(21) -CO-Ar²¹-CO-

(31) -O-Ar³¹-O-

[In Formula (21) and Formula (31), Ar²¹ and Ar³¹ represent a 1,4-phenylene group, a 1,3-phenylene group, a 2,6-naphthylene group, or a 4,4'-biphenylene group independently of each other. One or more hydrogen atoms in the group represented by Ar²¹ or Ar³¹ may be substituted with a halogen atom, an alkyl group having 1 to 10 carbon atoms, or an aryl group having 6 to 20 carbon atoms independently of each other.]

The content of the repeating unit (1) in the component (P) is preferably 30% by mol or more, more preferably 40% by mol or more and 80% by mol or less, still more preferably 50% by mol or more and 70% by mol or less, and particularly preferably 55% by mol or more and 70% by mol or less, with respect to the total of 100% by mol of the repeating unit (1), the repeating unit (2), and the repeating unit (3). In addition, the content of the repeating unit (1) in the component (P) is preferably 30% by mol or more, more preferably 40% by mol or more and 80% by mol or less, still more preferably 50% by mol or more and 70% by mol or less, and particularly preferably 55% by mol or more and 70% by mol or less, with respect to the total amount of all of the repeating units.

When the repeating unit (1) of the component (P) is a repeating unit derived from p-hydroxybenzoic acid, the content of the repeating unit derived from p-hydroxybenzoic acid is preferably 40% by mol or more, more preferably 45% by mol or more and 80% by mol or less, still more preferably 50% by mol or more and 70% by mol or less, and particularly preferably 55% by mol or more and 65% by mol or less, with respect to the total of 100% by mol of the repeating unit (1), the repeating unit (2), and the repeating unit (3). In addition, the content of the repeating unit derived from p-hydroxybenzoic acid in the component (P) is preferably 40% by mol or more, more preferably 45% by mol or more and 80% by mol or less, still more preferably 50% by mol or more and 70% by mol or less, and particularly preferably 55% by mol or more and 65% by mol or less, with respect to the total amount of all of the repeating units.

When the content of the repeating unit (1) is 80% by mol or less, the processing temperature is less likely to be high and flow marks are less likely to occur, which is preferable.

The content of the repeating unit (2) in the component (P) is preferably 35% by mol or less, more preferably 10% by mol or more and 35% by mol or less, still more preferably 15% by mol or more and 30% by mol or less, and particularly preferably 17.5% by mol or more and 27.5% by mol or less, with respect to the total of 100% by mol of the repeating unit (1), the repeating unit (2), and the repeating unit (3). In addition, the content of the repeating unit (2) in the component (P) is preferably 35% by mol or less, more preferably 10% by mol or more and 35% by mol or less, still more preferably 15% by mol or more and 30% by mol or less, and particularly preferably 17.5% by mol or more and 27.5% by mol or less, with respect to the total amount of all of the repeating units.

When the repeating unit (2) of the component (P) is a repeating unit derived from terephthalic acid, the content of the repeating unit derived from terephthalic acid is preferably 35% by mol or less, more preferably 10% by mol or more and 35% by mol or less, still more preferably 10% by mol or more and 20% by mol or less, and particularly preferably 11% by mol or more and 18% by mol or less, with respect to the total of 100% by mol of the repeating unit (1), the repeating unit (2), and the repeating unit (3). In addition, the content of the repeating unit derived from terephthalic acid in the component (P) is preferably 35% by mol or less, more preferably 10% by mol or more and 35% by mol or less, still more preferably 10% by mol or more and 20% by mol or less, and particularly preferably 11% by mol or more and 18% by mol or less, with respect to the total amount of all of the repeating units.

When the content of the repeating unit (2) is within the above range, sufficient heat resistance can be imparted to the molded article.

The content of the repeating unit (3) in the component (P) is preferably 35% by mol or less, more preferably 10% by mol or more and 35% by mol or less, still more preferably 15% by mol or more and 30% by mol or less, and particularly preferably 17.5% by mol or more and 27.5% by mol or less, with respect to the total of 100% by mol of the repeating unit (1), the repeating unit (2), and the repeating unit (3). In addition, the content of the repeating unit (3) in the component (P) is preferably 35% by mol or less, more preferably 10% by mol or more and 35% by mol or less, still more preferably 15% by mol or more and 30% by mol or less, and particularly preferably 17.5% by mol or more and 27.5% by mol or less, with respect to the total amount of all of the repeating units. The sum of the contents of each of the repeating units (1) to (3) in the component (P) does not exceed 100% by mol.

The component (P) may have two or more repeating units (1) to (3) independently of each other. Further, the component (P) may have a repeating unit other than the repeating units (1) to (3), but the content thereof is preferably 0% by mol or more and 10% by mol or less, and more preferably 0% by mol or more and 5% by mol or less, with respect to the total of all of the repeating units.

The component (P) may be used alone, or two or more thereof may be used in combination.

When two types of liquid crystal polyester resins are used in combination, the resin may be appropriately selected depending on the prepared molded article. For example, when the ratio between the liquid crystal polyester resin (1) and the liquid crystal polyester resin (2) having different combinatory proportions of the repeating units (1) to (3) is represented by [content of liquid crystal polyester resin (1)]/[content of liquid crystal polyester resin (2)] (parts by mass/part by mass), 90/10 to 10/90 is preferable, 80/20 to 20/80 is more preferable, and 60/40 to 40/60 is still more preferable.

The component (P) is preferably produced by melt-polymerizing the raw material monomer corresponding to the repeating unit that forms the component (P) and solid-phase polymerizing the obtained polymer (prepolymer). Accordingly, a high molecular weight liquid crystal polyester resin having high heat resistance, strength, and rigidity can be produced with good operability. The melt polymerization may be performed in the presence of a catalyst, examples of the catalyst include metal compounds such as magnesium acetate, stannous acetate, tetrabutyl titanate, lead acetate, sodium acetate, potassium acetate, and antimony trioxide; and nitrogen-containing heterocyclic compounds such as N,N-dimethylaminopyridine and N-methylimidazole, and nitrogen-containing heterocyclic compounds are preferable.

The flow starting temperature of the component (P) is preferably 270°C or higher, more preferably 270°C or higher and 400°C or lower, and still more preferably 280°C or higher and 380°C or lower.

When the flow starting temperature of the component (P) is within the above range, the heat resistance, strength and rigidity are good, the heat deterioration is unlikely to occur during molding, the viscosity at the time of melting is unlikely to increase, and thus the flowability tends to be less likely to decline.

The flow starting temperature is also called a flow temperature, is a temperature that indicates viscosity of 4800 Pa·s (48000 poise) measured using a capillary rheometer when melting and extruding the liquid crystal polyester resin from a nozzle with an inner diameter of 1 mm and a length of 10 mm while raising the temperature at a rate of 4°C/min under a load of 9.8 MPa (100 kgf/cm²), and is a reference for molecular weight of the liquid crystal polyester resin (refer to p. 95 of "Liquid crystal polymer - synthesis, molding, and application" edited by Naoyuki Koide, CMC CORPORATION, June 5, 1987).

The content of the component (P) in the present embodiment is preferably 30% by mass or more, more preferably 40% by mass or more, and still more preferably 50% by mass or more, with respect to the total amount (100% by mass) of the liquid crystal polyester resin composition of the present embodiment.

In addition, the content of the component (P) in the present embodiment is preferably 80% by mass or less, more preferably 70% by mass or less, and still more preferably 60% by mass or less, with respect to the total amount (100% by mass) of the liquid crystal polyester resin composition of the present embodiment.

For example, the content of the component (P) in the present embodiment is preferably 30 to 80% by mass, more preferably 40 to 70% by mass, and still more preferably 50 to 60% by mass, with respect to the total amount (100% by mass) of the liquid crystal polyester resin composition of the present embodiment.

### <Component (M): non-metallic and powdery pigment having metallic color>

Component (M) in the present embodiment: non-metallic and powdery pigment having a metallic color is a pigment that expresses metallic luminescence, excluding pigments (aluminum powder, bronze powder, and the like) made of metallic powder.

By incorporating the component (M), a metallic appearance and a metallic luminescence can be imparted and the design can be improved.

The component (M) exhibits a pH of 5 to 9 at 23°C in an aqueous dispersion obtained by mixing 10 g of the component (M) and 90 mL of ion-exchanged water.

In the present specification, the pH at 23°C in the aqueous dispersion obtained by mixing 10 g of the component (M) and 90 mL of ion-exchanged water is also referred to as "pH of the aqueous dispersion".

The pH of the aqueous dispersion in the component (M) of the present embodiment is preferably more than 6 and 8 or less, more preferably 6 or more and 7.8 or less, and further preferably 6.5 or more and 7.5 or less.

When the pH is within the above preferable range, deterioration of the component (P) can be further suppressed.

The specific method for measuring the pH is as shown below.

10 g of the component (M) is added to 90 mL of ion-exchanged water having a pH of 7.0, and the mixture is stirred at 23°C for 1 minute to obtain an aqueous dispersion in which the component (M) (non-dissolved substance) is uniformly dispersed. Then, after allowing this aqueous dispersion to stand for 5 minutes, the pH value of the aqueous dispersion can be measured by measuring the pH of the supernatant at 23°C with a pH meter (for example, F-23 manufactured by HORIBA, Ltd.).

As a method for adjusting the component (M) so as to satisfy the above pH range, for example, it is possible to perform control by a neutralization step which will be described later.

Examples of the component (M) include those in which plate-shaped inorganic filler particles are coated with an inorganic material; bismuth oxychloride; fish scale foil, and the like. Among these, the plate-shaped inorganic filler particles coated with an inorganic material is preferable.

The plate-shaped inorganic filler particles coated with an inorganic material is, specifically, plate-shaped inorganic filler particles which are the base material coated with an inorganic material having a high refractive index, such as titanium oxide.

Examples of the plate-shaped inorganic filler particles which are the base material include mica, synthetic mica (synthetic phlogopite), glass flakes, and the like.

Examples of the inorganic material include titanium oxide, zinc oxide, tin oxide, iron oxide, iron ferrocyanide, aluminum oxide, calcium fluoride, silica, magnesium oxide, and the like.

As the plate-shaped inorganic filler particles coated with the inorganic material, the plate-shaped inorganic filler particles may be coated with one kind of inorganic material alone or with two or more kinds of inorganic materials.

Among these in which the plate-shaped inorganic filler particles are coated with an inorganic material, those in which the plate-shaped inorganic filler particles are coated with a metal oxide are preferable, and those in which the plate-shaped inorganic filler particles are coated with titanium oxide (titanium oxide-coated plate-shaped inorganic filler particles) are more preferable.

More specific examples of the plate-shaped inorganic filler particles coated with a metal oxide include titanium oxide-coated mica obtained by coating mica with titanium oxide; iron oxide/titanium oxide-coated mica obtained by further coating mica with titanium oxide after coating mica with iron oxide; titanium oxide-coated synthetic mica obtained by coating synthetic mica with titanium oxide; iron oxide/titanium oxide-coated synthetic mica obtained by further coating synthetic mica with titanium oxide after coating synthetic mica with iron oxide; titanium oxide-coated glass flakes obtained by coating glass flakes with titanium oxide; iron oxide/titanium oxide-coated glass flakes obtained by further coating glass flakes with iron oxide after coating glass flakes with iron oxide; and titanium oxide/silica-coated glass flakes obtained by further coating glass flakes with silica after coating glass flakes with titanium oxide. Among these, titanium oxide-coated mica is preferable. The titanium oxide-coated mica may be in a state where the activity of titanium oxide is strongly suppressed by surface-treating the surface of titanium oxide with an inorganic substance (aluminum hydroxide, silica, alumina, zirconium, and the like).

Among the above, the component (M) is preferably titanium oxide-coated mica and aluminum hydroxide/titanium oxide-coated mica. The aluminum hydroxide/titanium oxide-coated mica is in a state where the activity of titanium oxide is strongly suppressed by further surface-treating the surface of titanium oxide in the titanium oxide-coated mica with aluminum hydroxide.

The titanium oxide-coated mica and the aluminum hydroxide/titanium oxide-coated mica in the component (M) can be produced by the methods disclosed in Japanese Unexamined Patent Application, First Publication No. 2002-129064, Japanese Unexamined Patent Application, First Publication No. 2004-224964, and the like.

The component (M) can be produced, for example, by performing the neutralization step described later to produce a component (M) that satisfies the pH range.

For example, a method for producing a titanium oxide-coated mica having a pH of the aqueous dispersion of 5 to 9 is as follows.

First, in a container equipped with a stirrer, a hydrochloric acid suspension having a pH of 2 to which the raw material mica is added is prepared and heated while stirring. Then, an aqueous solution of titanium tetrachloride is added dropwise to this suspension. At the same time, the sodium hydroxide aqueous solution is added dropwise to the suspension. In this manner, the aqueous solution of titanium tetrachloride is hydrolyzed to precipitate titanium oxide hydrate on the surface of the raw material mica particles. Then, the neutralization step of adding a sodium hydroxide aqueous solution to neutralize the mixture is performed. The suspension is then cooled to room temperature, filtered, and washed with water. Then, the mica on which the titanium oxide film is formed is fired to obtain the titanium oxide-coated mica. By adjusting the amount of the sodium hydroxide aqueous solution added in the neutralization step, the pH of the aqueous dispersion of the obtained titanium oxide-coated mica can be adjusted.

The method for producing aluminum hydroxide/titanium oxide-coated mica having a pH of the aqueous dispersion of 5 to 9 as follows.

First, aluminum sulfate is dissolved in purified water, and the titanium oxide-coated mica is added to this solution. After heating the obtained mixed solution while stirring and dispersing the mixture, the neutralization step is performed in which a sodium hydroxide aqueous solution is added to neutralize the mixture, the mixture is cooled to room temperature, washed with water, and dried. The obtained mass is pulverized to obtain aluminum hydroxide/titanium oxide-coated mica. By adjusting the amount of the sodium hydroxide aqueous solution added in the neutralization step of adding the sodium hydroxide aqueous solution, the pH of the aqueous dispersion of the obtained aluminum hydroxide/titanium oxide-coated mica can be adjusted.

A median diameter (D50) of the component (M) is preferably 5 to 120 µm, more preferably 5 to 100 µm, and still more preferably 8 to 95 µm.

When the median diameter (D50) of the component (M) is equal to or higher than the lower limit value of the above-mentioned preferable range, the design is further improved.

When the median diameter (D50) of the component (M) is not equal to or lower than the upper limit value of the above-mentioned preferable range, the decrease in impact strength can be further suppressed.

The median diameter (D50) is the particle size when the cumulative volume is 50% when the volume cumulative distribution curve is drawn from the small diameter side in the particle size distribution of the component (M).

The median diameter (D50) can be measured by a laser diffraction type particle size distribution measuring device (manufactured by HORIBA, Ltd., trade name: LA-950V2 and the like) by dispersing the component (M) in water.

Further, when the median diameter (D50) of the component (M) is within the above-mentioned preferable range, in a case where the particle size distribution of the component (M) is sharp, the metallic luminescence becomes stronger, and in a case where the particle size distribution of the component (M) is broad, a metallic appearance with less glare is exhibited. As described above, the desired appearance can be imparted by appropriately adjusting the particle size of the component (M).

The component (M) may be used alone, or two or more thereof may be used in combination.

The amount of the component (M) is preferably 4 to 50 parts by mass, more preferably 5 to 50 parts by mass, still more preferably 6 to 45 parts by mass, further more preferably 8 to 40 parts by mass, and particularly preferably 10 to 30 parts by mass with respect to 100 parts by mass of the component (P).

When the amount of the component (M) is equal to or higher than the lower limit value of the above-mentioned preferable range, the design is further improved.

When the amount of the component (M) is not equal to or lower than the upper limit value of the above-mentioned preferable range, excellent molding processability can be obtained.

In the step (i) of the present embodiment, in addition to the component (P) and the component (M), other components may be further mixed. As the other component, the component (F): inorganic filler other than the component (M) is preferably used.

The content of the component (M) in the present embodiment is preferably 1% by mass or more, more preferably 5% by mass or more, and still more preferably 8% by mass or more, with respect to the total amount (100% by mass) of the liquid crystal polyester resin composition of the present embodiment.

In addition, the content of the component (M) in the present embodiment is preferably 30% by mass or less, more preferably 25% by mass or less, and still more preferably 20% by mass or less, with respect to the total amount (100% by mass) of the liquid crystal polyester resin composition of the present embodiment.

For example, the content of the component (M) in the present embodiment is preferably 1 to 30% by mass, more preferably 5 to 25% by mass, and still more preferably 8 to 20% by mass, with respect to the total amount (100% by mass) of the liquid crystal polyester resin composition of the present embodiment.

### <<Component (F): inorganic filler other than component (M) described above>>

Component (F) in the present embodiment: inorganic filler other than the component (M) may be a fibrous filling material, may be a plate-shaped filling material, or may be a granular filler other than the fibrous and plate-shaped filling material.

Among the above, the component (F) is preferably plate-shaped particles.

Examples of the component (F) include talc filler, mica filler, titanium oxide filler, pigment, glass fiber, and the like.

### · Talc filler

The talc filler is preferably pulverized hydrated magnesium silicate. The crystal structure of the molecule of hydrated magnesium silicate is a pyrophyllite-type three-layer structure, and the talc filler is a stack of these structures. The talc filler is more preferably a flat plate-shaped filler obtained by finely pulverizing molecular crystals of hydrated magnesium silicate to the extent of a unit layer.

The talc filler may be untreated or treated.

Examples of the treated talc filler include those surface-treated with a known surfactant in order to improve the interfacial adhesiveness and dispersibility with the liquid crystal polyester resin. Examples of the surfactant include silane coupling agents, titanium coupling agents, higher fatty acids, higher fatty acid esters, higher fatty acid amides, higher fatty acid salts, and the like.

The median diameter (D50) of the talc filler is preferably 5 to 30 µm, and more preferably 10 to 25 µm.

One type of talc filler may be used alone, or two or more types may be used in combination.

The amount of the talc filler is preferably 4 to 80 parts by mass, more preferably 15 to 75 parts by mass, and still more preferably 40 to 70 parts by mass with respect to 100 parts by mass of the component (P).

When the amount of the talc filler is within the above-mentioned range, the impact strength can be further improved.

The content of the talc filler in the present embodiment is preferably 10% by mass or more, more preferably 20% by mass or more, and still more preferably 30% by mass or more, with respect to the total amount (100% by mass) of the liquid crystal polyester resin composition of the present embodiment.

In addition, the content of the talc filler in the present embodiment is preferably 60% by mass or less, more preferably 50% by mass or less, and still more preferably 40% by mass or less, with respect to the total amount (100% by mass) of the liquid crystal polyester resin composition of the present embodiment.

For example, the content of the talc filler in the present embodiment is preferably 10 to 60% by mass, more preferably 20 to 50% by mass, and still more preferably 30 to 40% by mass, with respect to the total amount (100% by mass) of the liquid crystal polyester resin composition of the present embodiment.

### · Mica filler

Mica filler is a pulverized product of silicate minerals containing aluminum, potassium, magnesium, sodium, iron, and the like. A structure is formed in which an octahedral structure made of two or three metal oxides and hydroxides is sandwiched between four tetrahedral structures formed by an oxide of three atoms of silicon (Si) and one atom of aluminum (Al).

The mica filler in the present embodiment may be any of natural mica such as muscovite, phlogopite, fluorine mica, and tetrasilicon mica, and artificially produced synthetic mica.

The mica filler may be untreated or treated.

Examples of the treated mica filler include those surface-treated with a known surfactant in order to improve the interfacial adhesiveness and dispersibility with the liquid crystal polyester resin. Examples of the surfactant include silane coupling agents, titanium coupling agents, higher fatty acids, higher fatty acid esters, higher fatty acid amides, higher fatty acid salts, and the like.

The median diameter (D50) of the mica filler is preferably 5 to 30 µm, and more preferably 10 to 25 µm.

One type of mica filler may be used alone, or two or more types may be used in combination.

The amount of the mica filler is preferably 4 to 80 parts by mass, more preferably 15 to 75 parts by mass, and still more preferably 40 to 70 parts by mass with respect to 100 parts by mass of the component (P).

When the amount of the mica filler is within the above-mentioned range, the impact strength can be further improved.

### · Titanium oxide filler

Titanium oxide filler is not particularly limited, and a known titanium oxide filler for resin filling can be used.

The crystal structure of the titanium oxide filler is not particularly limited, and may be a rutile type, an anatase type, or a mixture of the two. In the present invention, it is preferable to use a rutile-type titanium oxide filler having a higher refractive index than that of an anatase-type titanium oxide filler.

Further, the titanium oxide filler which was surface-treated may be used.

For example, by applying a surface treatment using an inorganic metal oxide, properties such as dispersibility can be improved. Examples of the inorganic metal oxide include aluminum oxide.

The median diameter of the titanium oxide filler is preferably 0.1 to 1 µm, and more preferably 0.15 to 0.25 µm.

The amount of the titanium oxide filler is preferably 1 to 20 parts by mass, more preferably 1 to 15 parts by mass with respect to 100 parts by mass of the component (P).

### · Pigment

Examples of the pigment include alumina, iron oxide, cobalt oxide, chromium oxide, manganese oxide, carbon black, and the like. Among these, carbon black is preferable because carbon black can give a more metallic appearance.

The amount of the pigment is preferably 0.01 to 5 parts by mass, and more preferably 0.02 to 1 part by mass with respect to 100 parts by mass of the component (P).

The content of the pigment in the present embodiment is preferably 0.01% by mass or more, more preferably 0.05% by mass or more, and still more preferably 0.08% by mass or more, with respect to the total amount (100% by mass) of the liquid crystal polyester resin composition of the present embodiment.

In addition, the content of the pigment in the present embodiment is preferably 3% by mass or less, more preferably 1% by mass or less, and still more preferably 0.5% by mass or less, with respect to the total amount (100% by mass) of the liquid crystal polyester resin composition of the present embodiment.

For example, the content of the pigment in the present embodiment is preferably 0.01 to 3% by mass, more preferably 0.05 to 1% by mass, and still more preferably 0.08 to 0.5% by mass, with respect to the total amount (100% by mass) of the liquid crystal polyester resin composition of the present embodiment.

### · Glass fiber

The type of glass of the glass fiber is not particularly limited, known glasses can be used, and examples thereof include E glass, C glass, A glass, and S glass.

The form of glass fiber may be any one of "glass roving", which is a continuous winding of single fiber or a plurality of twisted fibers, "chopped strand", which has a cut length (number-average fiber length) of 1 to 10 mm, and "milled fiber" which has a pulverized length (number-average fiber length) of 10 to 500 µm.

The glass fiber may be untreated or may be treated.

The glass fiber can be treated with a modifier, a silane coupling agent, a boron compound, or the like. Examples of the modifier include aromatic urethane modifiers, aliphatic urethane modifiers, acrylic modifiers, and the like.

In the present invention, the average fiber length of the glass fiber is preferably 20 to 5000 µm, and more preferably 50 to 4000 µm.

Among the above, the component (F) in the present embodiment is preferably at least one selected from the group consisting of talc and mica from the viewpoint of improving impact strength, and talc is more preferable. Further, from the viewpoint of improving the design, a pigment (preferably carbon black) is preferable.

The content of the component (F) in the present embodiment is preferably 10% by mass or more, more preferably 20% by mass or more, and still more preferably 30% by mass or more, with respect to the total amount (100% by mass) of the liquid crystal polyester resin composition of the present embodiment.

In addition, the content of the component (F) in the present embodiment is preferably 60% by mass or less, more preferably 50% by mass or less, and still more preferably 40% by mass or less, with respect to the total amount (100% by mass) of the liquid crystal polyester resin composition of the present embodiment.

For example, the content of the component (F) in the present embodiment is preferably 10 to 60% by mass, more preferably 20 to 50% by mass, and still more preferably 30 to 40% by mass, with respect to the total amount (100% by mass) of the liquid crystal polyester resin composition of the present embodiment.

The combinatory proportion (mass ratio) of the component (M) and the component (F) (component (F)/component (M)) is preferably 0.8 to 10, more preferably 1.0 to 8.0, and still more preferably 2.0 to 4.0.

When the combinatory proportion (mass ratio) of the component (M) and the component (F) (component (F)/component (M)) is equal to or higher than the lower limit value of the above-mentioned preferable range, the decrease in impact strength is further suppressed.

When the combinatory proportion (mass ratio) of the component (M) and the component (F) (component (F)/component (M)) is equal to or less than the upper limit value of the above-mentioned preferable range, the design is further improved.

Since the liquid crystal polyester resin composition produced by the method for producing the liquid crystal polyester resin composition described above contains the components (P) and (M) described above, the design is high. Further, since the component (M) showing a specific pH is adopted, a molded article having excellent impact strength can be prepared.

The liquid crystal polyester resin composition contains, for example, the component (P) and the component (M), and the content of the component (M) is 5 to 50 parts by mass with respect to 100 parts by mass of the component (P) (hereinafter referred to as LCP (1)).

In the LCP (1), the content of the component (M) is preferably 6 to 45 parts by mass, more preferably 8 to 40 parts by mass, and particularly preferably 10 to 30 parts by mass.

When the amount of the component (M) is equal to or higher than the lower limit value of the above-mentioned preferable range, the design is further improved.

When the amount of the component (M) is equal to or lower than the upper limit value of the above-mentioned preferable range, more excellent molding processability is obtained.

The LCP (1) has 50% fracture energy of 0.55 to 3 J at a measurement environment temperature of 23°C when the drop weight test is performed on a molded article having a size of 64 mm × 64 mm × thickness 3 mm, which is prepared using the LCP (1).

More specifically, molded article having a size of 64 mm × 64 mm × thickness 3 mm is prepared using the LCP (1) (liquid crystal polyester resin composition). When the drop weight test is performed in accordance with JIS K 7211-1 except for a condition that the load is 0.3 kg using a hemispherical striking core with a radius of 1/4 inch with a DuPont impact tester (IM-201 manufactured by Tester Sangyo Co., Ltd.) on this molded article, 50% fracture energy at the measurement environment temperature of 23°C is 0.55 to 3 J.

The 50% fracture energy is 0.55 to 3 J, preferably 0.58 to 2.5 J, more preferably 0.60 to 2 J, and still more preferably 0.60 to 1 J.

A case where the 50% fracture energy is equal to or lower than the above-mentioned preferable lower limit value means that the molded article has a higher impact strength.

Further, the LCP (1) of which the flexural strength is 90 to 120 when a flexural test is performed in accordance with ASTM D790 with respect to a rod-shaped molded article having a width of 12.7 mm, a length of 127 mm, and a thickness of 6.4 mm, which is prepared using LCP (1), is preferable.

The above-described method for producing a liquid crystal polyester resin composition of the present embodiment includes a step (i) of mixing a component (P): liquid crystal polyester resin with a component (M): non-metallic and powdery pigment having a metallic color. In addition, the component (M) having a pH of 5 to 9 at 23°C in an aqueous dispersion obtained by mixing 10 g of the component (M) and 90 mL of ion-exchanged water is used. Therefore, hydrolysis of the component (P) is unlikely to occur, and deterioration is suppressed. Therefore, according to the method for producing a liquid crystal polyester resin composition of the present embodiment, it is possible to produce a liquid crystal polyester resin composition from which a molded article having an excellent design and excellent impact strength is able to be produced.

### [Examples]

Hereinafter, the present invention will be described in more detail based on Examples, but the present invention is not limited to the following Examples.

### <Method for producing liquid crystal polyester resin 1>

994.5 g (7.2 mol) of p-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1347.6 g (13.2 mol) of acetic anhydride, and 0.194 g of 1-methylimidazole as a catalyst were added to a reactor equipped with a stirring device, a torque meter, a nitrogen gas introduction tube, a thermometer, and a reflux condenser, the mixture was stirred at room temperature for 15 minutes to sufficiently substitute the inside of the reactor with nitrogen gas, and then the temperature was raised during the stirring. When the internal temperature reached 145°C, the mixture was stirred for 1 hour while maintaining the same temperature.

Then, the temperature was raised to 320°C over 2 hours and 50 minutes while distilling off the distillate by-product acetic acid and unreacted acetic anhydride, and the prepolymer was obtained when the reaction was terminated at the time when an increase in torque was observed. The flow starting temperature of the prepolymer was 261°C.

The obtained prepolymer was cooled to room temperature and pulverized with a coarse pulverizer to obtain a prepolymer powder. Then, the obtained prepolymer powder was heated from room temperature to 250°C over 1 hour under a nitrogen atmosphere, was heated from 250°C to 285°C for 5 hours, and was held at 285°C for 3 hours, and solid-phase polymerization was performed to obtain a liquid crystal polyester resin 1. The flow starting temperature of the obtained liquid crystal polyester resin 1 was 327°C.

### <Method for producing non-metallic and powdery pigment having metallic color (M)-1>

In a container equipped with a stirrer, a hydrochloric acid suspension to which the raw material mica is added was prepared and heated while stirring. Then, an aqueous solution of titanium tetrachloride was added dropwise to this suspension. At the same time, the sodium hydroxide aqueous solution was added dropwise to the suspension. In this manner, the aqueous solution of titanium tetrachloride was hydrolyzed to precipitate titanium oxide hydrate on the surface of the raw material mica particles. Then, the sodium hydroxide aqueous solution was added to neutralize the suspension such that the pH of the suspension became 7.0. The suspension was then cooled to room temperature, filtered, and washed with water. Then, the mica in which the titanium oxide film was formed was fired to obtain a non-metallic and powdery pigment having a metallic color (M)-1.

### <Method for producing non-metallic and powdery pigment having metallic color (M)-2>

Aluminum sulfate was dissolved in purified water, and the non-metallic and powdery pigment having a metallic color (M)-1 was added to the solution. The obtained mixed solution was heated while stirring and dispersing mixture. Then, the neutralization step was performed in which a sodium hydroxide aqueous solution is added to neutralize the mixture such that the pH of the suspension became 8.0, and the suspension was cooled to room temperature, washed with water, and dried. The obtained mass was pulverized to obtain aluminum hydroxide/titanium oxide-coated mica (M)-2.

### <Method for producing non-metallic and powdery pigment having metallic color (M)-3>

The method for producing a pigment (M)-3 is the same as that of the pigment (M)-2 except that the pH of the suspension was adjusted to 4.5 in the neutralization step of aluminum hydroxide/titanium oxide-coated mica (M)-2.

### <Method for producing non-metallic and powdery pigment having metallic color (M)-4>

The method for producing a pigment (M)-4 is the same as that of the pigment (M)-2 except that the pH of the suspension was adjusted to 4.7 in the neutralization step of aluminum hydroxide/titanium oxide-coated mica (M)-2.

### <Raw material for producing liquid crystal polyester resin composition>

### · Component (P): Liquid crystal polyester resin

LCP-1: Liquid crystal polyester resin 1 described above

### · Component (M): Non-metallic and powdery pigment having a metallic color

### (M)-1: Titanium oxide-coated mica having a pH of the aqueous dispersion of 7.03

The pH is a value obtained by measuring the pH of the supernatant (solution part) at 23°C with a pH meter (F-23 manufactured by HORIBA, Ltd.) by making an aqueous dispersion in which (M)-1 is uniformly dispersed by adding 10 g of (M)-1 to 90 mL of ion-exchanged water having a pH of 7.0 and by stirring the mixture at 23°C for 1 minute, and then, by allowing this aqueous dispersion to stand for 5 minutes.

### (M)-2: Aluminum hydroxide/titanium oxide-coated mica having a pH of the aqueous dispersion of 8.00

The pH of the aqueous dispersion in (M)-2 was measured in the same manner as the method for measuring the pH of the aqueous dispersion in (M)-1, except that (M)-1 was changed to (M)-2.

### (M)-3: Aluminum hydroxide/titanium oxide-coated mica having a pH of the aqueous dispersion of 4.50

The pH of the aqueous dispersion in (M)-3 was measured in the same manner as the method for measuring the pH of the aqueous dispersion in (M)-1, except that (M)-1 was changed to (M)-3.

### (M)-4: Aluminum hydroxide/titanium oxide-coated mica having a pH of the aqueous dispersion of 4.74

The pH of the aqueous dispersion in (M)-4 was measured in the same manner as the method for measuring the pH of the aqueous dispersion in (M)-1, except that (M)-1 was changed to (M)-4.

### · Component (F): Inorganic filler other than the component (M)

(F)-1: Talc (manufactured by Nippon Talc Co., Ltd., trade name: MS-KY, median diameter (D50): 25 µm)
(F)-2: Carbon black (manufactured by Cabot Corporation, trade name: Black pearls 4350)

### <Method for producing liquid crystal polyester resin composition>

### (Examples 1 and 2, Comparative Examples 1 and 2)

At the combinatory proportion shown in Table 1 below, the component (P), the component (M), and the component (F) were granulated at a cylinder temperature of 330°C using a twin-screw extruder (manufactured by Ikegai Corp, PCM-30) to obtain the liquid crystal polyester resin compositions of each example.

**[Table 1]**

| | | Example 1 | Example 2 | Comparative Example 1 | Comparative Example 2 |
|---|---|---|---|---|---|
| Component (P) | LCP-1 | 100 | 100 | 100 | 100 |
| Component (M) | (M)-1 | 18 | | | |
| | (M)-2 | | 18 | | |
| | (M)-3 | | | 18 | |
| | (M)-4 | | | | 18 |
| Component (F) | (F)-1 | 61 | 61 | 61 | 61 |
| | (F)-2 | 0.18 | 0.18 | 0.18 | 0.18 |
| pH of component (M) | | 7.03 | 8.00 | 4.50 | 4.74 |

### [Evaluation of flow temperature (flow starting temperature)]

Using a flow tester (CFT-500 type manufactured by Shimadzu Corporation), a temperature indicating a viscosity of 4800 Pa·s (48,000 poise) was measured by filling a cylinder fitted with a die with nozzles having an inner diameter of 1 mm and a length of 10 mm with approximately 2 g of the liquid crystal polyester resin compositions of Examples 1 and 2 and Comparative Examples 1 and 2, by melting the liquid crystal polyester resin composition of each example while raising the temperature at a rate of 4°C/min under a load of 9.8 MPa (100 kg/cm2), and by extruding the melted liquid crystal polyester resin composition from the nozzle. The results are shown in Table 2.

### [Evaluation of heat deflection temperature]

Using an injection molding machine (PS40E5ASE manufactured by Nissei Plastic Industrial Co., Ltd.), under the conditions of a cylinder temperature of 350°C, a mold temperature of 130°C, and an injection speed of 60 mm/sec, rod-shaped test pieces of each example having a width of 6.4 mm, a length of 127 mm, and a thickness of 12.7 mm were respectively produced as molded articles from the liquid crystal polyester resin compositions of Examples 1 and 2 and Comparative Examples 1 and 2. Next, with respect to the obtained rod-shaped test piece, the heat deflection temperature was measured at a load of 1.82 MPa and a temperature rise rate of 2°C/min in accordance with ASTM D648, and the heat resistance was evaluated. The results are shown in Table 2.

### [Evaluation of flexural strength]

Using an injection molding machine (PS40E5ASE manufactured by Nissei Plastic Industrial Co., Ltd.), under the conditions of a cylinder temperature of 350°C, a mold temperature of 130°C, and an injection speed of 60 mm/sec, rod-shaped test pieces of each example having a width of 12.7 mm, a length of 127 mm, and a thickness of 6.4 mm were respectively produced as molded articles from the liquid crystal polyester resin compositions of Examples 1 and 2 and Comparative Examples 1 and 2. Next, with respect to the obtained rod-shaped test piece, the flexural test was performed in accordance with ASTM D790 to measure the flexural strength. The results are shown in Table 2.

### [Evaluation of 50% impact fracture height and 50% impact fracture energy]

From the liquid crystal polyester resin compositions of Examples 1 and 2 and Comparative Examples 1 and 2, test pieces of each example having a size of 64 mm × 64 mm × thickness 3 mm were respectively produced as molded articles. Next, the drop weight test was performed in accordance with JIS K 7211-1 except for a condition that the load is 0.3 kg using a hemispherical striking core with a radius of 1/4 inch with a DuPont impact tester (IM-201 manufactured by Tester Sangyo Co., Ltd.) on the obtained test piece, 50% impact fracture height (m) at the measurement environment temperature of 23°C and 50% fracture energy (J) at this time was measured. The results are shown in Table 2.

**[Table 2]**

| | Example 1 | Example 2 | Comparative Example 1 | Comparative Example 2 |
|---|---|---|---|---|
| Flow temperature [°C] | 320 | 318 | 315 | 315 |
| Hat deflection temperature [°C] | 260 | 259 | 257 | 257 |
| Flexural strength [MPa] | 109 | 109 | 108 | 109 |
| 50% impact fracture height [m] | 0.24 | 0.21 | 0.17 | 0.18 |
| 50% impact fracture energy [J] | 0.70 | 0.62 | 0.51 | 0.52 |

From the results shown in Table 2, the molded article prepared by using the liquid crystal polyester resin composition of Example has the same flexural strength as that of the molded article prepared by using the liquid crystal polyester resin composition of Comparative Example. However, the values of 50% impact fracture height and a 50% impact fracture energy were high.

From the above, it can be confirmed that, according to the method for producing a liquid crystal polyester resin composition of the present embodiment, it is possible to prepare a molded article having an excellent design and excellent impact strength.

## Claims

1. A liquid crystal polyester resin composition comprising:
a component (P): a liquid crystal polyester resin with a component (M): non-metallic and powdery pigment having a metallic color,
wherein the content of the component (M) is 5 to 50 parts by mass with respect to 100 parts by mass of the component (P),
a 50% impact fracture energy at a measurement environment temperature of 23°C when a drop weight test is performed on a molded article having a size of 64 mm × 64 mm × thickness 3 mm, which is prepared by using the liquid crystal polyester resin composition, is 0.55 to 3 J, and
wherein the component (M) exhibits a pH of 5 to 9 at 23°C in an aqueous dispersion obtained by mixing 10 g of the component (M) and 90 mL of ion-exchanged water.

2. The liquid crystal polyester resin composition according to claim 1,
wherein the component (M) is plate-shaped inorganic filler particles coated with a metal oxide.

3. The liquid crystal polyester resin composition according to claim 1 or 2, further comprising:
a component (F): inorganic filler other than the component (M).

4. The liquid crystal polyester resin composition according to claim 3,
wherein the component (F) is at least one member selected from the group consisting of talc and mica.

5. A method for producing a liquid crystal polyester resin composition, comprising:
a step (i) of mixing a component (P): a liquid crystal polyester resin with a component (M): a non-metallic and powdery pigment having a metallic color,
wherein the component (M) exhibits a pH of 5 to 9 at 23°C in an aqueous dispersion obtained by mixing 10 g of the component (M) and 90 mL of ion-exchanged water.

6. The method for producing a liquid crystal polyester resin composition according to claim 5,
wherein an amount of the component (M) is 5 to 50 parts by mass with respect to 100 parts by mass of the component (P).

7. The method for producing a liquid crystal polyester resin composition according to claim 5 or 6,
wherein the component (M) is plate-shaped inorganic filler particles coated with a metal oxide.

8. The method for producing a liquid crystal polyester resin composition according to any one of claims 5 to 7,
wherein the component (M) exhibits a pH of more than 6.0 and 8.0 or less at 23°C in the aqueous dispersion.

9. The method for producing a liquid crystal polyester resin composition according to any one of claims 5 to 8,
wherein in the step (i), in addition to the component (P) and the component (M), a component (F): inorganic filler other than the component (M) is further mixed.

10. The method for producing a liquid crystal polyester resin composition according to claim 9,
wherein the component (F) is at least one member selected from the group consisting of talc and mica.

## Patentansprüche

1. Eine flüssigkristalline Polyesterharzzusammensetzung, umfassend:
eine Komponente (P): ein flüssigkristallines Polyesterharz mit einer Komponente (M): nichtmetallisches und pulverförmiges Pigment mit einer metallischen Farbe,
wobei der Gehalt der Komponente (M) 5 bis 50 Massenteile, bezogen auf 100 Massenteile der Komponente (P), beträgt,
eine 50%-Aufprallbruchenergie bei einer Messumgebungstemperatur von 23°C, wenn ein Fallgewichtsversuch an einem Formgegenstand mit einer Größe von 64 mm × 64 mm × 3 mm Dicke durchgeführt wird, der unter Verwendung der flüssigkristallinen Polyesterharzzusammensetzung hergestellt wurde, 0,55 bis 3 J beträgt, und
wobei die Komponente (M) einen pH von 5 bis 9 bei 23°C in einer wässrigen Dispersion aufweist, die durch Mischen von 10 g der Komponente (M) und 90 ml ionengetauschtem Wasser erhalten wird.

2. Die flüssigkristalline Polyesterharzzusammensetzung nach Anspruch 1,
wobei die Komponente (M) plattenförmige anorganische Füllstoffpartikel sind, die mit einem Metalloxid beschichtet sind.

3. Die flüssigkristalline Polyesterharzzusammensetzung nach Anspruch 1 oder 2, ferner umfassend:
eine Komponente (F): anorganischem Füllstoff, der von der Komponente (M) verschieden ist.

4. Die flüssigkristalline Polyesterharzzusammensetzung nach Anspruch 3,
wobei die Komponente (F) mindestens ein Mitglied ist, das aus der Gruppe bestehend aus Talk und Glimmer ausgewählt ist.

5. Ein Verfahren zur Herstellung einer flüssigkristallinen Polyesterharzzusammensetzung, umfassend:
einen Schritt (i) des Mischens einer Komponente (P): eines flüssigkristallinen Polyesterharzes mit einer Komponente (M): einem nichtmetallischen und pulverförmigen Pigment mit einer metallischen Farbe,
wobei die Komponente (M) einen pH von 5 bis 9 bei 23°C in einer wässrigen Dispersion aufweist, die durch Mischen von 10 g der Komponente (M) und 90 ml ionengetauschtem Wasser erhalten wird.

6. Das Verfahren zur Herstellung einer flüssigkristallinen Polyesterharzzusammensetzung nach Anspruch 5,
wobei eine Menge der Komponente (M) 5 bis 50 Massenteile, bezogen auf 100 Massenteile der Komponente (P), beträgt.

7. Das Verfahren zur Herstellung einer flüssigkristallinen Polyesterharzzusammensetzung nach Anspruch 5 oder 6,
wobei die Komponente (M) plattenförmige anorganische Füllstoffpartikel sind, die mit einem Metalloxid beschichtet sind.

8. Das Verfahren zur Herstellung einer flüssigkristallinen Polyesterharzzusammensetzung nach einem der Ansprüche 5 bis 7,
wobei die Komponente (M) einen pH von mehr als 6,0 und 8,0 oder weniger bei 23°C in der wässrigen Dispersion aufweist.

9. Das Verfahren zur Herstellung einer flüssigkristallinen Polyesterharzzusammensetzung nach einem der Ansprüche 5 bis 8,
wobei in dem Schritt (i) zusätzlich zu der Komponente (P) und der Komponente (M) ferner eine Komponente (F): ein anorganischer Füllstoff, der von der Komponente (M) verschiedenen ist, beigemischt wird.

10. Das Verfahren zur Herstellung einer flüssigkristallinen Polyesterharzzusammensetzung nach Anspruch 9,
wobei die Komponente (F) mindestens ein Mitglied ist, das aus der Gruppe bestehend aus Talk und Glimmer ausgewählt ist.

## Revendications

1. Composition de résine de polyester cristal liquide comprenant :
un composant (P) : une résine de polyester cristal liquide avec un composant (M) : un pigment pulvérulent et non métallique ayant une couleur métallique,
dans laquelle la teneur en le composant (M) est de 5 à 50 parties en masse pour 100 parties en masse du composant (P),
l'énergie de rupture au choc à 50 % à la température ambiante de mesure de 23°C quand un test de masse tombante est effectué sur un article moulé ayant une taille de 64 mm x 64 mm x 3 mm d'épaisseur, qui est préparé par utilisation de la composition de résine de polyester cristal liquide, est de 0,55 à 3 J, et
dans laquelle le composant (M) présente un pH de 5 à 9 à 23 °C dans une dispersion aqueuse obtenue par mélange de 10 g du composant (M) et de 90 ml d'eau ayant subi un échange d'ions.

2. Composition de résine de polyester cristal liquide selon la revendication 1, dans laquelle le composant (M) consiste en particules de charge inorganique en forme de plaquettes revêtues d'un oxyde métallique.

3. Composition de résine de polyester cristal liquide selon la revendication 1 ou 2, comprenant en outre :
un composant (F) : une charge inorganique autre que le composant (M).

4. Composition de résine de polyester cristal liquide selon la revendication 3, dans laquelle le composant (F) est au moins un membre choisi dans le groupe constitué par le talc et le mica.

5. Méthode pour produire une composition de résine de polyester cristal liquide, comprenant :
une étape (i) de mélange d'un composant (P) : une résine polyester cristal liquide, avec un composant (M) : un pigment pulvérulent et non métallique ayant une couleur métallique,
dans laquelle le composant (M) présente un pH de 5 à 9 à 23 °C dans une dispersion aqueuse obtenue par mélange de 10 g du composant (M) et de 90 ml d'eau ayant subi un échange d'ions.

6. Méthode pour produire une composition de résine de polyester cristal liquide selon la revendication 5, dans laquelle la quantité du composant (M) est de 5 à 50 parties en masse pour 100 parties en masse du composant (P).

7. Méthode pour produire une composition de résine de polyester cristal liquide selon la revendication 5 ou 6, dans laquelle le composant (M) consiste en particules de charge inorganique en forme de plaquettes revêtues d'un oxyde métallique.

8. Méthode pour produire une composition de résine de polyester cristal liquide selon l'une quelconque des revendications 5 à 7, dans laquelle le composant (M) présente un pH de plus de 6,0 et de 8,0 ou moins à 23 °C dans la dispersion aqueuse.

9. Méthode pour produire une composition de résine de polyester cristal liquide selon l'une quelconque des revendications 5 à 8, dans laquelle, dans l'étape (i), en plus du composant (P) et du composant (M), un composant (F) : une charge inorganique autre que le composant (M), est en outre mélangé.

10. Méthode pour produire une composition de résine de polyester cristal liquide selon la revendication 9, dans laquelle le composant (F) est au moins un membre choisi dans le groupe constitué par le talc et le mica.
